# EUROPEAN PATENT SPECIFICATION

(11) **EP 4 062 057 B1**
(45) Date of publication and mention of the grant of the patent: **12.11.2025**
(21) Application number: 20816399.8
(22) Date of filing: 20.11.2020
(51) Int. Cl.: F03D 9/19, F03D 80/80

(54) **A WIND TURBINE**
WINDTURBINE
ÉOLIENNE

(30) Priority: 22.11.2019 DK PA201970715
(43) Date of publication of application: 28.09.2022
(73) Proprietor: VESTAS WIND SYSTEMS A/S, 8200 Aarhus N (DK)
(72) Inventor: BAUN, Torben Ladegaard, 8541 Skødstrup (DK); VOIGT, Niels Vinther, 8200 Aarhus N (DK)
(74) Representative: Vestas Patents Department
(86) International application number: PCT/DK2020/050318
(87) International publication number: WO 2021/098929

(56) References cited:
- EP-A1- 2 811 160
- EP-A1- 3 276 169
- DE-U1- 202018 105 845
- US-A1- 2011 187 119

## Description

### INTRODUCTION

The present disclosure relates to a wind turbine comprising at least two separate units assembled to form a nacelle connected to a wind turbine tower, wherein a first of said two units houses a rotor-supporting assembly.

The disclosure further relates to a method for using the wind turbine.

### BACKGROUND

Typically, wind turbines have produced electrical power to a power grid. Due to variations in the need for electrical power, electrical power is not always a desired output.

DE202018105845U1 and EP3276169A1 are relevant examples of prior art.

### SUMMARY

The invention is defined by the appended claims: a wind turbine according to independent claim 1 and a method of making a chemical substance according to independent claim 12.

It is an object of embodiments of the disclosure to provide an alternative power output from a wind turbine.

The disclosure provides a wind turbine comprising at least two separate units assembled to form a nacelle wherein a second of said two units houses an electrolysis cell stack powered by a generator.

Since the electrolysis cell stack is housed in a separate unit, it can be replaced by other means for power conversion, or it can be separated from the rotor-support assembly and generator e.g. for service etc.

Examples of a first unit and second unit include units of any size and shape and configured to be assembled.

The second and/or the first unit may be formed with a size and/or the outer shape comparable to, or equal to, the size and shape of a shipping freight container. Each unit thereby inherits the advantages of shipping freight containers with respect to handling, transportation, and storage. Shipping freight containers can for example be handled anywhere in the world by ship, train, and truck etc. and at lower costs compared to bulk or special transport.

The cost savings are even more pronounced when the first or second unit is a shipping freight container. A shipping freight container is also referred to as an intermodal container, a standard freight container, a box container, a sea fright container, or an ISO container, and refers in general to a container used to store and move materials and products in the global containerized intermodal freight transport system for intercontinental traffic. The shipping freight container may follow the dimensional and structural specifications in the ISO standard of ISO 668:2013 for series 1 freight containers.

The first unit and the second unit may be arranged side by side in a direction radially away from a rotational axis defined by the rotor-supporting assembly as opposed to one after the other in the direction of the rotational axis.

The nacelle may be carried either directly by the tower or indirectly by the tower via an intermediate tower structure. If the wind turbine is of the traditional horizontal axis type, the nacelle is typically carried by a yawing arrangement between the tower top and the nacelle.

The disclosure may, however, also relate to a multiple rotor wind turbine of the kind where more than one nacelle are carried by a transverse beam structure which is again carried by the tower, e.g. via a yawing arrangement between the tower and the transverse beam structure.

The disclosure may relate to an upwind wind turbine or to a downwind wind turbine.

The wind turbine could be a direct drive wind turbine with the generator typically placed outside the nacelle, or the wind turbine could be with the generator located in the main unit.

Depending on the type of wind turbine, the unit(s) may comprise further parts, e.g. a gear box, a bearing system and different kinds of peripheral equipment, e.g. for lubrication, cooling, and control purpose.

The cooling system may operate to cool components of the drivetrain and/or the electrolysis cell stack, e.g. with a switch arranged to switch between cooling of drivetrain or cooling of electrolysis cell stack. Such a switch may operate automatically based on a cooling need in the drivetrain and/or in the electrolysis cell stack, e.g. by use of temperature sensors arranged in the drivetrain and/or in the electrolysis cell stack.

A third unit may be assembled to one or the two separate units. The third unit may e.g. contain a power conversion assembly connected between the generator and a power grid. Such a power conversion assembly may comprise one or more operative components, e.g. a converter, a transformer, a switch gear or other components related to conversion of the power from the generator into a form suitable for the recipient.

In case of electrical energy, the power conversion assembly may be configured for linking the generator e.g. to an external power grid. In that case, the power conversion assembly may be constituted e.g. by a converter, a transformer, and/or a switch gear. Any such components may be comprised in the power conversion assembly.

The generator may, as an example, be an asynchronous or synchronous generator, and the converter voltage may be in same range as a generator voltage, sometimes referred to as stator voltage.

The generator, in another example, may be a doubly fed induction generator (DFIG). In that case, the voltage on the converter could be different from the Generator stator voltage. The converter is connected to generator rotor and is normally the same voltage or a lower voltage than the stator voltage.

Low voltage may e.g. be considered as voltages up to 1000V. Medium voltage may be considered as voltages of 1KV to about 60kV. The generator Voltage could be low voltage, or medium voltage.

In one embodiment, the second, and the third unit are arranged on opposite sides of the first unit. In that embodiment, the second unit and the third unit may have half the size of one shipping freight container following the dimensions and structural specifications in the ISO standard of ISO 668:2013 for series 1 freight containers, and arranged such that the two half parts of the container can be assembled to form one container during transport, and split into two units to be arranged on opposite sides of the first unit. The container may particularly be split in an interface extending in the longitudinal direction of the container, i.e. the longest direction of the container.

The first unit and the second unit are assembled at the interface by a unit fixation structure. The unit fixation structure may be suitable for allowing release of the second unit from the first unit at a later date after the first unit is assembled on the tower top for example for service or replacement. For that purpose, the unit fixation structure may comprise mutually interlocking structural features on the first unit and on the second unit. Examples of such mutually interlocking features may be protrusions on one of the first and second unit and indentations or holes on the other one of the first and second unit, the unit fixation structure may form a bolted interface allowing releasable joining of the first and second units, or the second unit may be held in place on the first unit by cables by which the second unit can be lowered to the ground for service, replacement of components, or for transport of components and personnel between ground and the nacelle. In one embodiment, the unit fixation structure is configured such that the second unit can be received by the first unit when the second unit is lowered in close vicinity to the first unit. Such a unit fixation structure may be constituted by hooks or by interlocking structures on the first unit and the second unit.

The electrolysis cell stack may typically convert water and/or carbon dioxide into a chemical substance, e.g. hydrogen or carbon monoxide by use of electrical power from the generator and a different unit or configuration may contain a chemical synthesis facility to convert the electrolysis products into methanol, or ammonia or other chemical substances. The water may be supplied via a fluid supply assembly facilitating a fluid flow from a water supply to the electrolysis system. For carbon or nitrogen based hydrogen carriers, CO₂, or N₂.may be supplied through a piping or captured from the air around the nacelle.

The first unit may house a fluid- or gas-delivery assembly facilitating a flow from the electrolysis cell stack to a recipient. In one embodiment, the chemical substance produced by the electrolysis cell stack may be transported by the fluid or liquid delivery assembly e.g. through the first unit into the tower.

The second unit may be releasable from the first unit. In this embodiment, the fluid supply assembly and the fluid delivery assembly may facilitate disconnection in an interface between the two units. A supply release structure or a delivery release structure may e.g. facilitate releasable connection of the fluid supply assembly to the electrolysis cell stack and allow reassembly if the second unit is attached for use in another wind turbine.

The power conversion assembly housed in the third unit may comprise an operative component selected from the group consisting of: transformers, converters, batteries, gas-liquid separation equipment, coolers, pumps, pressure regulators and switch gears.

The first unit may particularly be connected to a wind turbine tower, e.g. via a yawing arrangement. The first unit may house the rotor-supporting assembly.

The second unit may be connected to the wind turbine tower via the first unit.

Even though the second unit is connected to the wind turbine tower via the first unit, and contains the electrolysis cell stack, the electrolysis cell stack may be connected directly to the first unit. In that way, the first unit forms a load path from the electrolysis cell stack into the tower. The first unit may e.g. comprise a main frame holding the rotor-supporting assembly, and the electrolysis cell stack may be connected directly to the main frame.

The first and second unit may be arranged to hermetically isolate one of the units from the other one of the units. Such a hermetic isolation in one selected sub unit may have several advantages. One unit may be hermetic, whereas an adjacent could be open and thereby allow swift pressure reduction e.g. in case of fire. Access doors between the units may be hermetically sealable.

In one embodiment, the first unit and the second units are joined in an interface forming a gap allowing air to pass e.g. from beneath the nacelle to above the nacelle, through the gap. Such a gap may increase thermal convection and thus cooling of the space inside the first and second units. A gap may also be formed between the first and the third unit or between the second and third unit depending on the position of the third unit relative to the first and second units. Further, if an explosion should occur in one of the sub units, the gap may reduce the impact of the explosion on adjacent units which are separated by a gap. To further reduce such an impact, at least one, or each auxiliary unit may have a pressure release structure allowing rapid opening of the interior space. This may be facilitated by blowout panels attached in the wall structure with a reduced strength. In one embodiment, an entire side surface of the second unit(s) may be releasable by an increased pressure inside an auxiliary unit.

In one embodiment, vibration dampening material is arranged between the units. Rubber or foam material, or material with a similar elastically deformable and vibration dampening effect may be used. The dampening material may particularly be compressed between the first unit and the second unit and it may particularly be arranged where the first unit and the second unit are fixed by nails, rivets, bolts or any similar mechanical attachment.

In one embodiment, the first unit is broader than the second unit(s). That the first unit is "broader" means that its dimension in a horizontal plane, and perpendicular to the rotational axis is larger than the same dimension of the second unit(s). The first unit may particularly be broader than a shipping freight container following the dimensional and structural specifications in the ISO standard of ISO 668:2013 for series 1 freight containers, whereas the second unit(s) may have the size of, or be smaller than what is specified for those ISO standard, ISO 668:2013, series 1 freight containers.

The nacelle may comprise a crane structure attached to the first unit and configured to hoist the second unit in a vertical direction from ground to a position where the unit fixation structure can connect the second unit to the first unit. This means that the crane structure is configured to hoist the second unit vertically without having to move it in other directions. This hoisting procedure is particularly suitable in combination with said unit fixation structures comprising rotatable or slidable hooks facilitating attachment without necessitating relative movement between the first and second units in other directions than vertical.

The crane may e.g. include a cantilever beam structure movable between a suspended and a retracted configuration. In the suspended configuration, the cantilever beam structure forms at least one and optionally several outwards projecting cantilevers configured to carry a second unit and usable for hoisting an second unit towards and away from the first unit. The outwards projecting cantilever beam structure may particularly be attached on a roof part of the first unit.

Generally, the electrolysis cell stack may be powered by the generator via a converter. The converter could be housed in the main unit, in the second unit or in the third unit. The converter may e.g. be a separate component, or it may be integrated in the generator or in the electrolysis cell stack.

In a second aspect, the disclosure provides a method of making hydrogen by use of wind energy, the method comprising:
- providing a wind turbine comprising at least two separate units assembled to form a nacelle connected to a wind turbine tower, wherein a first of said two units houses a rotor-supporting assembly and a generator, and a second of said two units houses an electrolysis cell stack, and
- powering the electrolysis cell stack by the electrolysis cell stack by the generator.

The method may comprise the step of feeding the electrolysis cell stack with water via the first unit, and the step of conducting the chemical substance from the electrolysis cell stack via the first unit.

### LIST OF DRAWINGS

In the following, embodiments of the disclosure will be described in further details with reference to the drawing in which:
Figs. 1a and 1b illustrate wind turbines;
Fig. 2 illustrates the nacelle of the wind turbine;
Figs. 3-5 illustrate different configurations of a wind turbine.
Fig. 6 illustrates an embodiment where two second units 61, 62 are located one above the other;
Fig. 7 illustrates schematically details of the interface;
Figs. 8-9 illustrate the first unit and second unit from Fig. 7 after the second unit has been attached to the first unit;
Fig. 10 illustrates schematically the first and second units with their contents;
Fig. 11a illustrates an embodiment with a third unit;
Fig. 11b illustrates details of a gap between the two units
Figs. 12-15 illustrate 4 different embodiments of interfaces between the first unit and the second unit.
Figs. 16-18 illustrate an embodiment where the first unit and second units are assembled by a hinge structure;
Figs. 19, 20 illustrate further details of a hook for attaching the second unit to the first unit;
Fig. 21 illustrates the hook in an open position where the second unit is free to be lowered to the ground;
Fig. 22 illustrates a cross section with two bolt holes for attachment of the second unit on the first unit;
Figs. 23, 24, 25 illustrate an embodiment where the hook is configured for sliding; and
Figs. 26-28 illustrate embodiments of cranes on the first unit for hoisting the second unit.

### DESCRIPTION OF EMBODIMENTS

It should be understood that the detailed description and specific examples, while indicating embodiments, are given by way of illustration only, since various changes and modifications within the scope of this disclosure will become apparent to those skilled in the art from this detailed description.

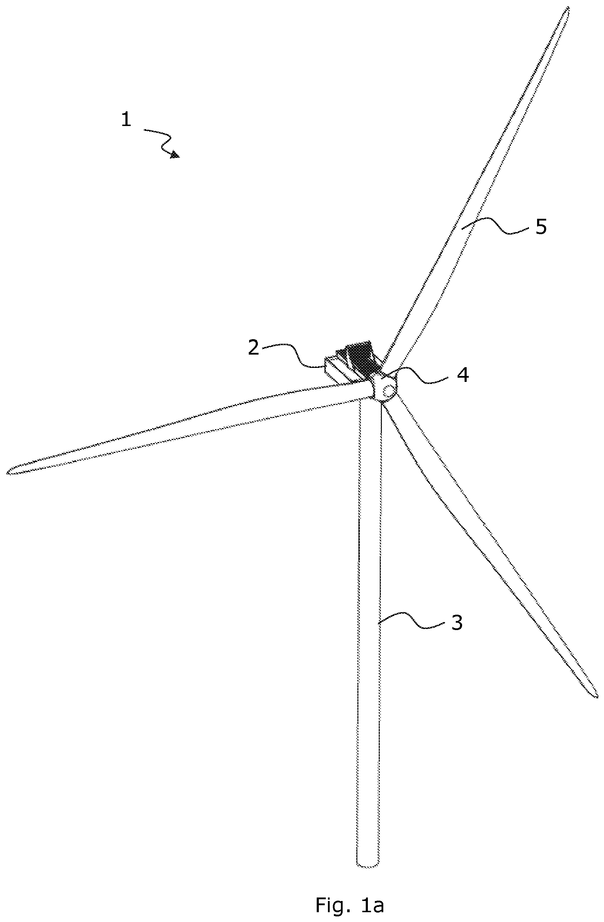

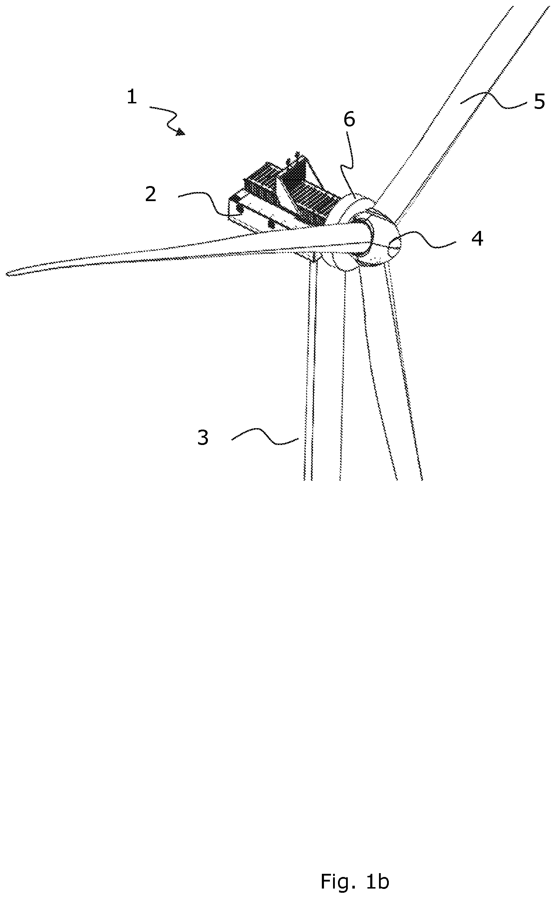

Figs. 1a and 1b illustrate wind turbines 1 with a nacelle 2 mounted on a tower 3. A hub 4 carrying three rotor blades 5 forms a rotor and is carried by a rotor-supporting assembly in the nacelle 2. Typically, the rotor-supporting assembly comprises a rotor shaft connecting a gear arrangement and a generator to the hub. A gear is, however, not always required since the generator could be directly driven by the shaft. Fig. 1b illustrates a direct drive wind turbine with the generator 6 located outside the nacelle.

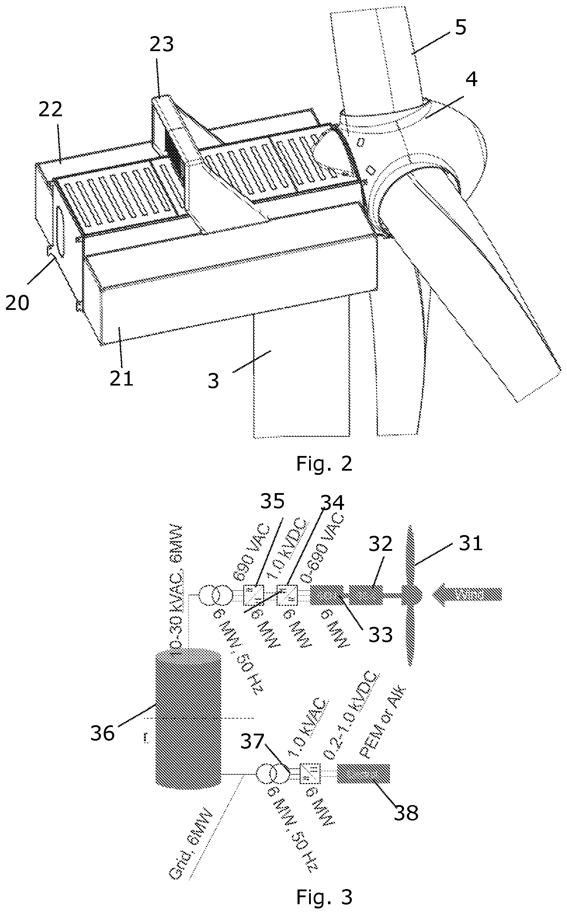

Fig 2 illustrates that the nacelle comprises a first unit 20 and a second units 21 and a third unit 22. A cooling area 23 is arranged on top of the nacelle. The cooling area is formed by a heat exchanger which may form part of the first unit, and/or any of the second or third units. The first unit 20 is mounted on the tower 3 via a yawing arrangement (not shown), allowing the nacelle 2 to rotate in order to direct the rotor into the wind. The cooling arrangement may be connected both to the drivetrain, e.g. for cooling gear, generator and other components of the drivetrain, and to the electrolysis cell stack to optionally cool the electrolysis cell stack.

The first unit 20 accommodates a main bearing unit supporting a main shaft for rotation therein, a gear arrangement and a generator, arranged sequentially behind the hub 4. The components in the first unit primarily form part of the drive train.

The second unit 21 accommodates an electrolysis cell stack 34, and a fluid supply and delivery structure communicating fluids with the electrolysis cell stack.

The second unit 21 and the third unit 22 is mounted along a side of the first unit 20 by a unit fixation structure. In the disclosed embodiment, they are mounted in such a manner that the second unit 21 is mounted along a left side of the first unit 20 and the third unit 22 is mounted along a right side of the first unit 20, as seen in a direction along a rotational axis of the hub 4 from the hub 4 towards a rear wall of the first unit 20.

The first unit and the second units are enclosed and optionally sealable units such that one compartment is formed by the second unit, defining an auxiliary space and another compartment is formed by the first unit, defining a main space. That allows the rotor-supporting assembly to be isolated from the electrolysis cell stack. The two compartments may be joined by the cooperating openings 36 allowing personnel and equipment to enter from the main space in the first unit into the auxiliary space in the second unit. The openings 36 may be sealed and thereby prevent fire etc. from spreading from one of the first and second unit to the other one of the first and second unit.

The third unit houses a power conversion assembly for converting power from the generator for powering the electrolysis cell stack.

In Fig. 1, the second and third units are constituted by elements having generally the shape and size of standardized freight containers such as a 40 foot shipping freight containers having a dimension and structural specifications as provided by the ISO standard, ISO 668:2013 for series 1 freight containers. The second units are attached to the first unit by the ISO-corner lifting structure, typically molded in steel and constituting a particularly strong interface to the container.

Figs. 3-5 illustrate different configurations of a wind turbine.

In Fig. 3, the wind turbine comprises a rotor 31 driving a generator 32 via a gearbox 33. The gearbox is not decisive, and the use of the other components may be considered also for a directly driven generator with no gearbox between the generator and the rotor.

The generator is electrically connected to the converter 34 converting from AC to DC. The converter 34 is again connected to the converter 35 converting from DC to AC with a characteristic of the electrical signal which is suitable for grid connection. This is a typical connection in a wind turbine. The AC signal provided by the power conversion assembly in the nacelle is transmitted through the wind turbine tower 36. Somewhere else, e.g. at the bottom of the tower, the AC signal is converted by the power conversion assembly 37 into a DC signal which can be used in the electrolysis cell stack 38.

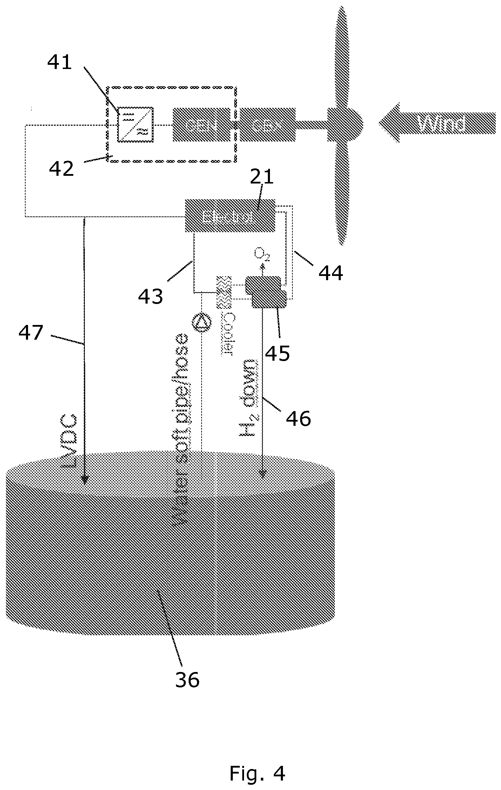

Fig. 4 illustrates a wind turbine where the electrolysis cell stack is located above the wind turbine tower 36. In this embodiment, the power conversion assembly 41 converts the AC power from the generator into a DC signal. The conversion could be an integrated part of the generator, visualized by the dotted box 42. The electrolysis cell stack is powered by the DC power directly and receives water via the fluid supply assembly 43. The produced chemical substance, in this embodiment Hydrogen, is delivered through the tower by the fluid delivery assembly 44 and the gas/liquid separator 45. The hydrogen is delivered through the tower via the hose system 46.

Additional power can be transmitted through the tower in DC form via the cable 47, e.g. for battery charging at the base of the wind turbine tower.

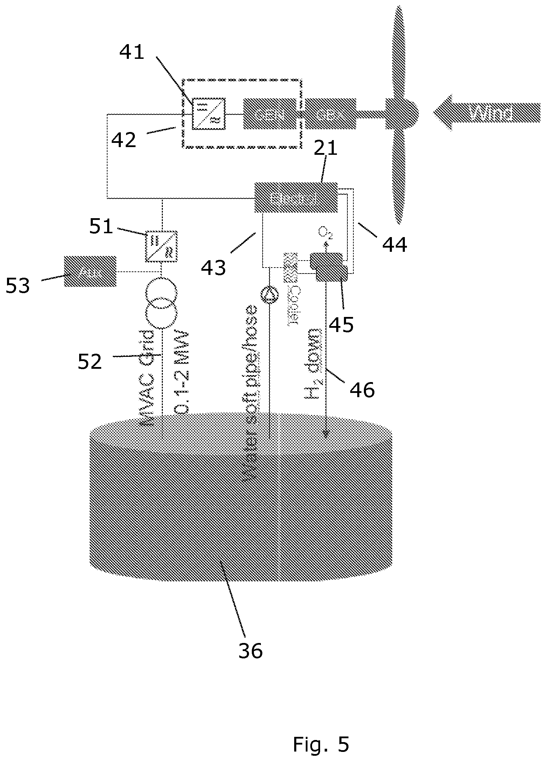

Fig. 5 illustrates an embodiment with essentially the same components as shown in Fig. 4, and with the same numbers. Additionally, this embodiment includes an additional power conversion assembly 51 configured to convert the DC power into AC power which can be delivered to a grid via a connection 52 extending through the tower 36, or it can be consumed by the wind turbine in various power consuming components 53, e.g. for cooling or control purpose.

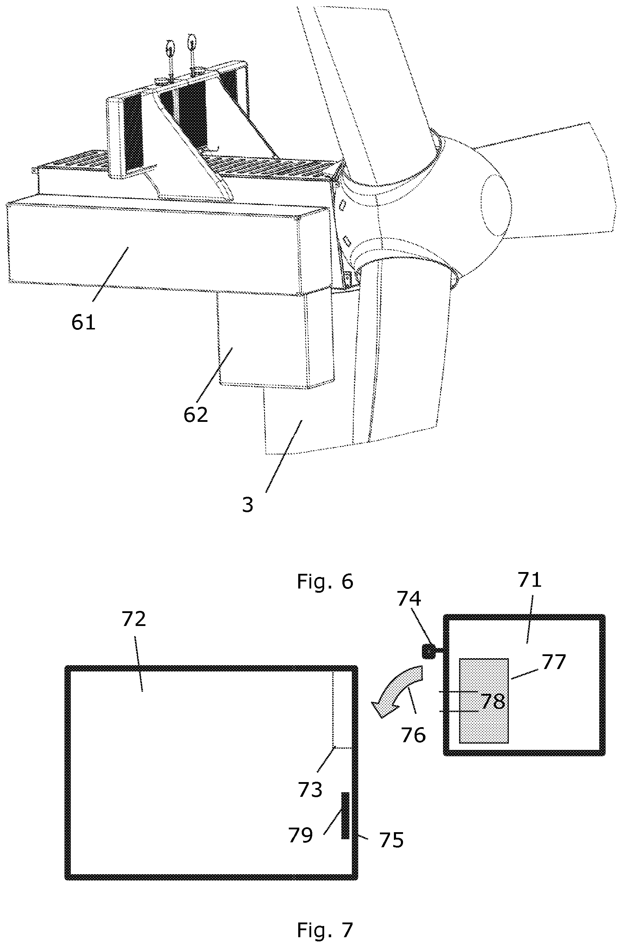

Fig. 6 illustrates an embodiment where the second unit 61 and the third unit 62 are joined with the third unit below the second unit. In this embodiment, the upper second unit 61 is constituted by a unit having the size and shape of a 40 foot shipping freight container, and the lower, third unit 62 is constituted by a unit having the size and shape of a 20 foot shipping freight container. Both containers have a dimension and structural specifications as provided by the ISO standard, ISO 668:2013, and the second units are attached to each other mainly by the corner lifting arrangements of the 20 foot container, and partly by the corner lifting arrangement of the 40 foot container.

Fig. 7 illustrates schematically details of the interface. The interface joins the second unit 71 and the first unit 72 in a releasable manner and allows the second unit to be attached to the first unit after transport to the installation site, or to be replaced e.g. during maintenance. In the disclosed embodiment, the second unit 71 is attached to the first unit 72 independently of any other units, and the unit fixation structure is constituted by an inward groove or track 73 in the first unit. The track 73 is illustrated with a dotted line and defines a recess into the outer surface 75. The track has a C-shaped profile in a horizontal cross section, i.e. when seen from above, the track is configured to receive the projection 74 provided on the second unit, and particularly it can receive the projection 74 through a procedure where the second unit 71 is lowered down along the outer surface 75 of the first unit 72. This is illustrated by the arrow 76. This procedure allows easy replacement of a second unit.

The first unit may form a load path from the electrolysis cell stack, which is housed in the second unit, down into the tower, e.g. via the main frame. Particularly, this load path may be different from the load path from the second unit into the tower. In the following, this is explained relative to different embodiments.

The second unit 71 accommodates an electrolysis cell stack 77 which is fixed to the second unit by electrolysis cell stack fixation structure constituted by the bolt shaped fixation pins 78.

The first unit has a strengthening bracket 79 attached to the outer wall and configured for receiving the weight of the converter 77 when the second unit is received and fixed on the first unit.

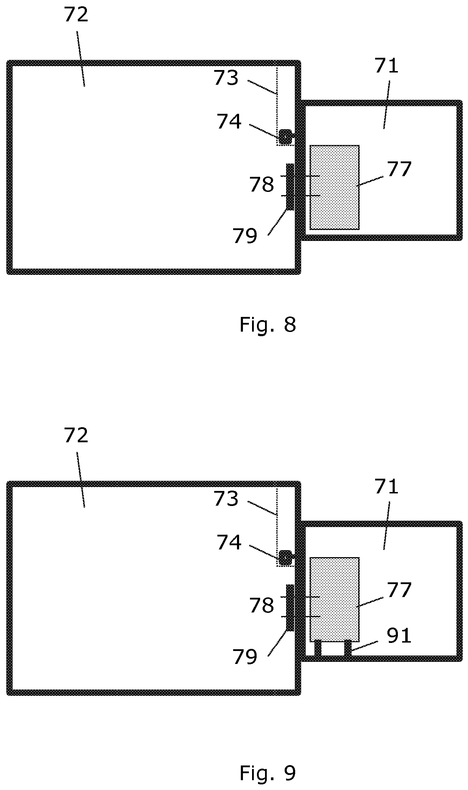

Fig. 8 illustrates the first unit and second unit from Fig. 7 after the second unit has been attached to the first unit. In this state, the bolt shaped fixation pins 78 are extended sideways to the left and thereby engage into the strengthening bracket feature 79. The bracket may be connected to a rigid frame in the first unit, e.g. supported by the main frame to thereby direct loads from the electrolysis cell stack directly into the tower via the main frame.

The bolt shaped fixation pins now constitute the electrolysis cell stack fixation structure by which the electrolysis cell stack is carried directly by the first unit. The electrolysis cell stack fixation structure forms part of a load path from the operative component into the tower, and the interface between the first unit and the second unit forms part of another load path from the second unit into the tower. Fig. 9 illustrates that the electrolysis cell stack can be supported in the second unit by a floor support structure 91 thereby sharing the load of the electrolysis cell stack between a main frame in the first unit and the second unit.

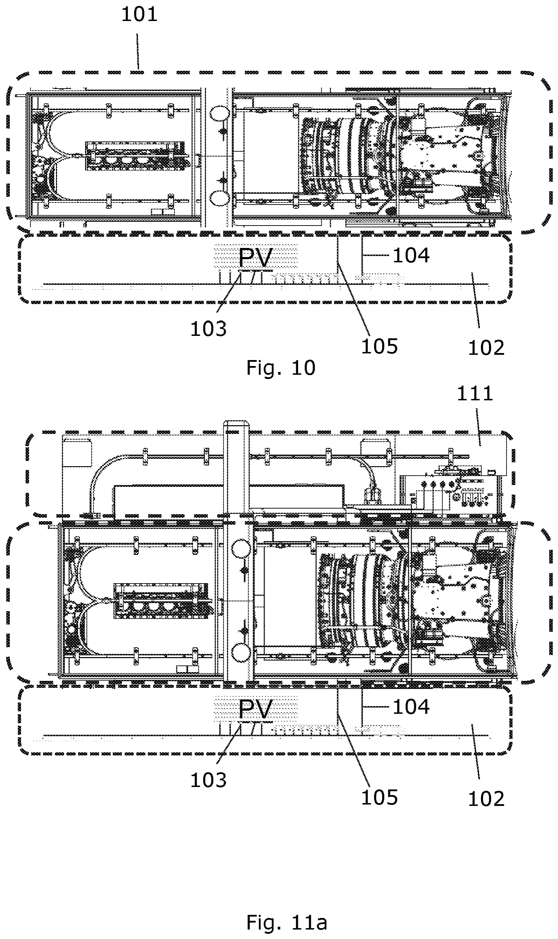

Fig. 10 illustrates schematically the first unit 101with its content and the second unit 102 with its content. In the second unit, the electrolysis cell stack 103 is supported by the a fluid supply assembly105 facilitating a fluid flow from a water supply through the first unit to the electrolysis cell stack 103. The fluid delivery assembly 104 provides a fluid flow of the hydrogen or other chemical substances produced by the electrolysis cell stack through the first unit and through the wind turbine tower to a recipient.

Fig. 11a illustrates an embodiment with a third unit 111 which may house one or more operative components of a power conversion assembly. E.g. a converter for converting from DC to AC, or optionally, a converter and a transformer for converting power from the generator and for grid connecting the wind turbine. In the last mentioned embodiment, the wind turbine can produce both the chemical substance in question and electrical power for a grid.

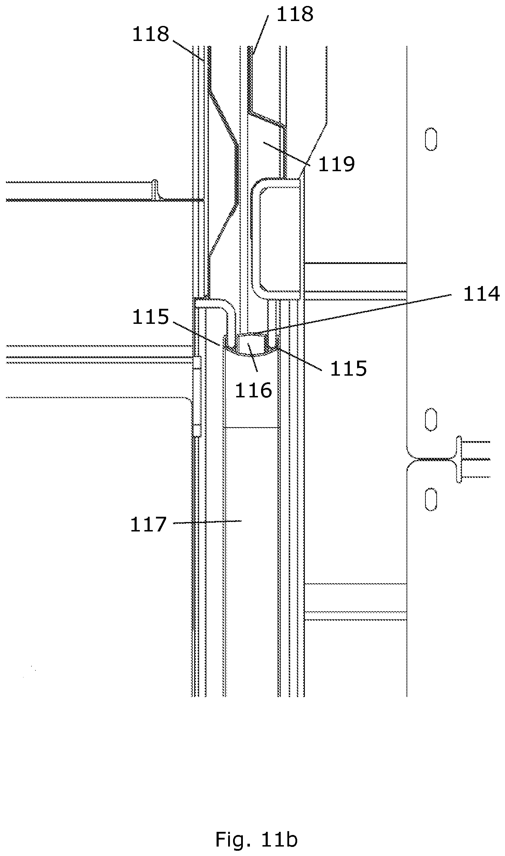

Fig. 11b illustrates the gasket seal 114 forming two engagement joints 115 connected by a resilient sealing transition 116 forming a sealed duct 117 between the sidewalls 118 of the units 71, 72. The sealed duct can be used for passing cables etc. between the units, or as access way for personnel.

The sidewalls are corrugated. More particularly, the corrugations of the main unit and the corrugations of the auxiliary unit are different. There is a gap 119 between the corrugated walls whereby air can flow between the main unit and the auxiliary unit. The gap has a size which, due to the corrugations varies along the length of the unit.

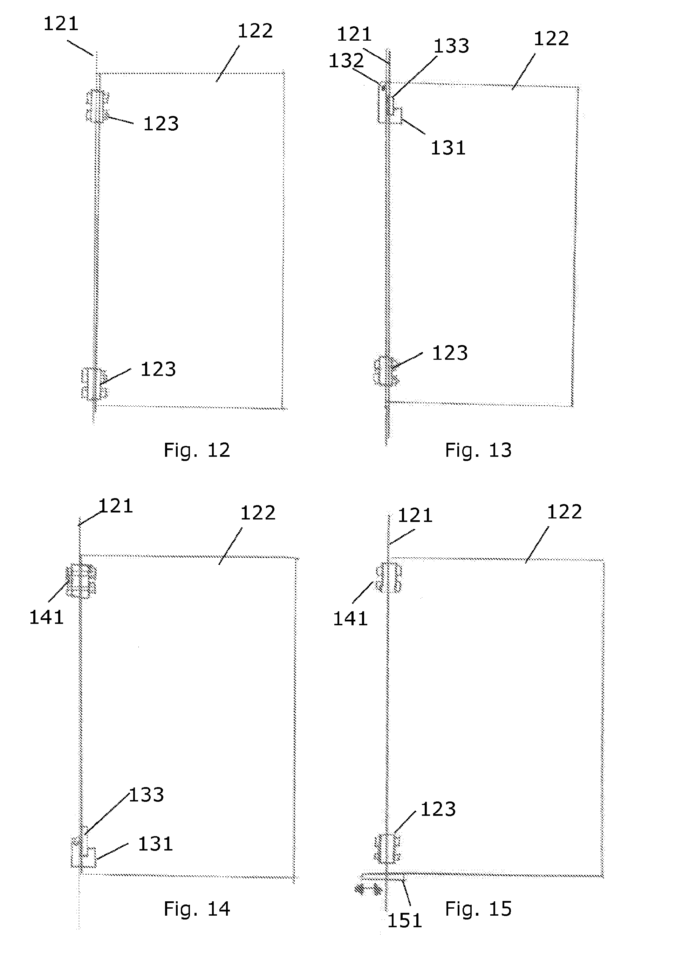

Figs. 12-15 illustrate four different embodiments of the unit fixation structure forming the interfaces between the first unit and the second unit. In each of these four illustrations, the first unit 121 and the second unit 122 are connected by cooperating structures forming the unit fixation structure and being described in further details below.

In Fig. 12, the cooperating structures are constituted by brackets 123 by which the first and second units are joined by bolts.

In Fig. 13, the cooperating structures are constituted by a lower bracket 123 similar to the one used in Fig. 12. At the upper edge, the first unit and second unit are assembled by a hook 131 pivotally joined to the first unit at the hinge point 132. The hook can rotate as indicated by the arrow 133 and engages the edge-bracket 134 of the second unit when in the illustrated position. When the lower bracket 123 is removed, and the hook 131 is rotated into the first unit, the second unit can be lowered to the ground.

The embodiment in Fig. 14 is comparable to the embodiment in Fig. 13, but where the lower bracket is replaced with an upper bracket 141, and the hook is placed at a lower edge.

In Fig. 15, a lower and an upper bracket is used for bolting the second unit to the first unit, and a slidable support 151 supports the lower surface of the second unit while the bolts are attached. If it is desired to lower the second unit to the ground, e.g. for replacement or maintenance of the operative component, the slidable support can be slid to the left and the second unit can be lowered down, e.g. by use of a crane build into the first unit.

In any of the embodiments shown in Figs. 12-15, the brackets or hooks direct the load from the second unit into a rigid part of the first unit, e.g. into load carrying column e.g. a corner column of the first unit. Various structural features may connect the brackets or hooks which carry the second unit directly to the main frame in the first unit to thereby establish a load path into the tower.

In addition to the hook and bracket unit fixation structure illustrated in Figs. 12-15, an electrolysis cell stack fixation structure (not shown) connects the electrolysis cell stack (not shown) directly to the main frame inside the first unit.

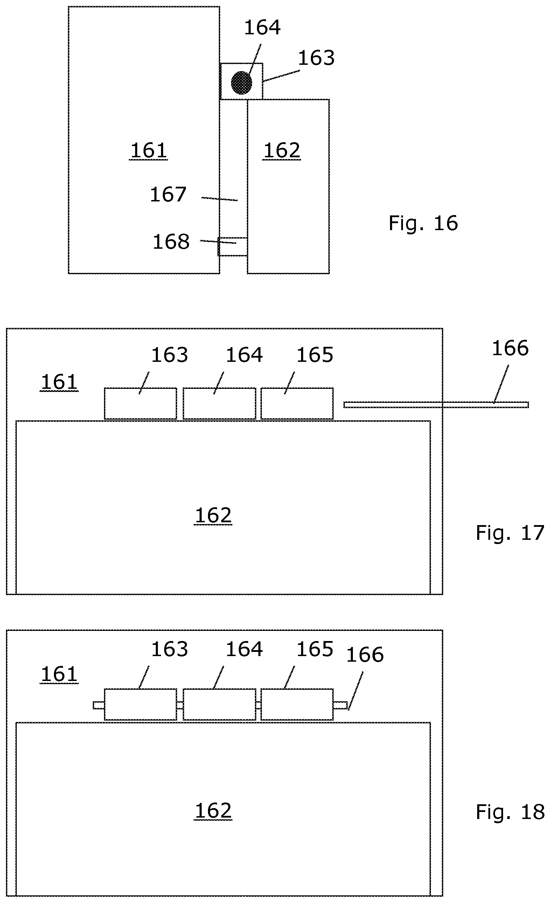

Figs. 16-18 illustrate an embodiment where the first unit and second unit are assembled by a hinge structure comprising hinge elements 163, 164, 165 with a hole for receiving a hinge pin 166 extending through the hinge elements. Fig. 16 further shows that the interface forms a gap 167 allowing air to pass e.g. from beneath the nacelle to above the nacelle, through the gap. The gap is held open at the bottom by the distance element 168, which could be constituted by a number of pins or an open structure allowing air to pass between the units.

Such a gap may increase thermal convection and thus cooling of the space inside the first and second units. The gap is not limited to the embodiment with the hinge structure but could be combined with any other assembly method.

Figs. 17 and 18 illustrate the hinge elements 163, 164, 165 and the hinge pin 166. In Fig. 17, the hinge elements are positioned correctly relative to the each other such that the hinge pin can be slid into the hinge elements. In Fig. 18, the hinge pin is inserted through the holes of the hinge elements.

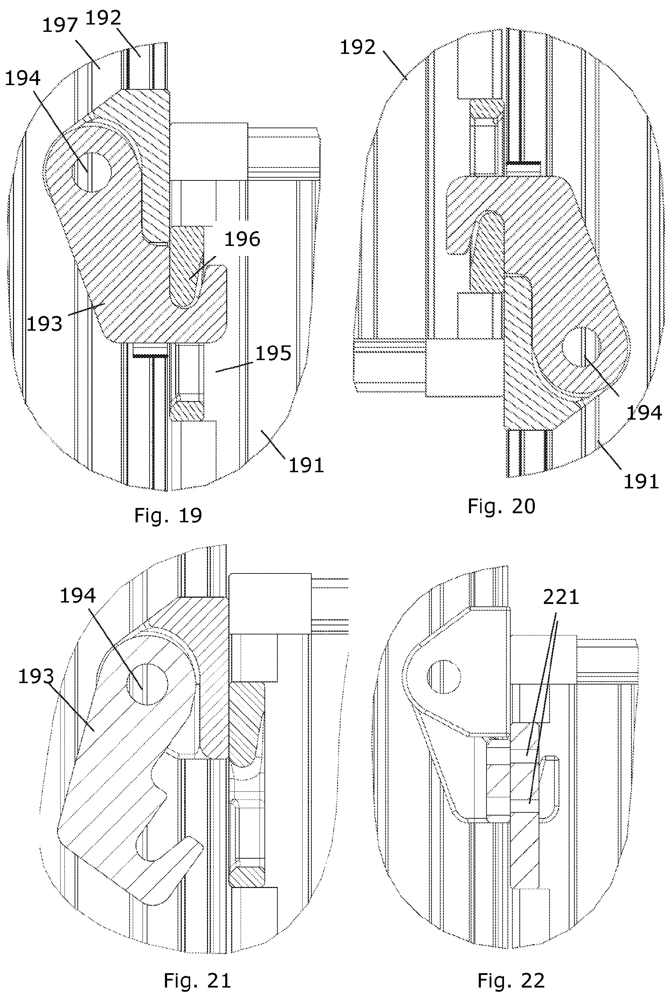

Fig. 19 illustrates further details of a hook for attaching the second unit 191 to the first unit 192. The hook 193 is suspended rotationally at the hinge 194 in the first unit. The hook can rotate through the opening 195 in the second unit and catch a recess or edge 196 in the second unit.

The hook could also be attached in the second unit and catch a recess or edge in the first unit, in which case it may be attached reversely, i.e. as illustrated in Fig 20. The position of the hook may be controlled by an actuator.

Fig. 21 illustrates the hook in an open position where the second unit is free to be lowered to the ground.

Fig. 22 illustrates a cross section where two bolt holes 221 can be seen. The bolt holes facilitate attachment of the second unit on the first unit by use of bolts for solid fixation. In this embodiment, the hook is mainly for positioning the second unit in the correct height relative to the first unit, and the bolts are for joining the units.

In Fig. 19, 21 and 22, the hook is preferably supported by the main frame of the first unit, e.g. via column or support posts arranged along an inner surface of the first unit. In Fig. 19, the column 197 extends along an inner surface of the first unit and supports the hook on the main frame in the bottom part of the first unit.

In Fig 20, where the hook forms part of the second unit, the edge in the first unit where the hook engages, may preferably be carried by the main frame in the first unit. Again, this could be via posts or columns arranged along an inner surface of the first unit.

The hook could be moved between the open position (Fig. 21) and the closed position (Fig. 19, 20, 22) by power driven means, e.g. including a hydraulically driven actuator.

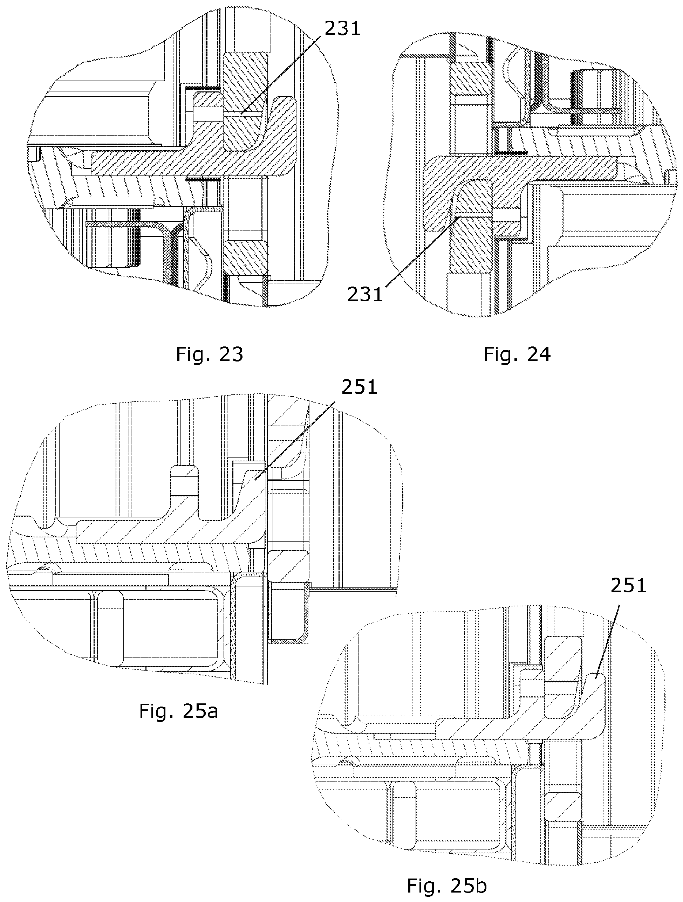

Figs. 23, 24, 25 illustrate an embodiment where the hook is not rotationally suspended but slidingly suspended. The function is similar to the embodiment of Figs. 19-22. In Figs. 23 and 24, a cross sectional view illustrates a bolt hole 231 which can be used for solid, bolted fixation of the second unit on the first unit. The hook in Fig. 23 is attached to the first unit and the hook in Fig. 24 is attached to the second unit.

In Fig. 25a, the hook 251 is slided to the left thereby disengaging the edge of the second unit and allowing the second unit to be lowered to the ground. In Fig.25b, the hook 251 is slided to the right, thereby engaging the edge of the second unit and holding the two units fixed to each other. The hook may be slided by power driven means, e.g. by a hydraulic actuator.

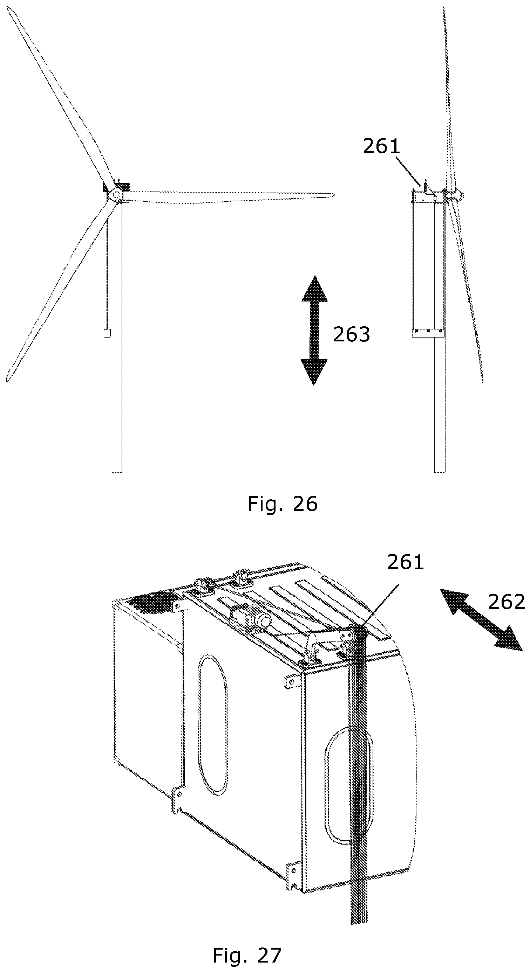

Fig. 26 illustrates hoisting of a second unit up or down during maintenance or replacement. The second unit is hoisted by use of a crane 261 forming part of the first unit. Movement is essentially only in the vertical plane, illustrated by the arrow 263, and the attachment of the second unit on the first unit may be facilitated by a unit fixation structure as described previously, including movable fixation features such as hinged or slidable hooks etc.

Fig. 27 illustrates the internal crane 261 in an enlarged view. The crane is attached to a roof part of the first unit and by its location, it can hoist the second unit in a vertical direction to a position where said unit fixation structures can form engagement between the first and the second units. This procedure may not require movement in other directions than the vertical direction and therefore facilitates a simple assembly procedure with reduced need for external crane assistance. For adjustment in a horizontal plane, the crane 261 may have the option of moving horizontally, e.g. as illustrated by the arrow 262.

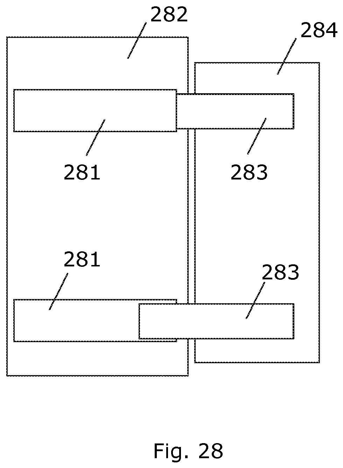

Fig. 28 illustrates schematically, another crane structure with a double cantilever beam 281 on the roof of the first unit 282. The cantilever beam 281 can extend sideways in telescopic section 283. The cantilever beam facilitates lifting and connection of the second unit 284 to the first unit 282. Even though the unit fixation structures disclosed herein, including pivotable or slidable hooks, generally facilitate attachment of the second unit by hoisting only in the vertical direction, the in and out movement facilitates fine adjustment of a horizontal distance between the first unit and the second unit.

### DEFINITIONS

Herein, the term "nacelle" means the generally accepted term describing the machine house for a wind turbine, i.e. that part which carries the rotor and drive train and which is carried by the wind turbine tower.

The terms "first unit" and "second unit" herein refers to units which can be transported separately, and which can be assembled with one or more other units to form the nacelle.

Herein, the term "rotor-supporting assembly" refers to those parts of the nacelle which carries the rotor, typically a drive train, a main bearing and a main frame. The drive train may include different components depending on the type of wind turbine, e.g. a rotor shaft, the generator, and optionally a gearbox between the rotor shaft and the generator.

## Claims

1. A wind turbine (1) comprising at least two separate units (20,21) assembled to form a nacelle (2) connected to a wind turbine tower (3), wherein a first unit (20) of said two units (20,21) houses a rotor-supporting assembly and a generator (6), and wherein the first unit (20) is connected to said wind turbine tower (3); **characterized in that** a second unit (21) of said two units (20,21) houses an electrolysis cell stack (34) powered by said generator (6).

2. The wind turbine according to claim 1, wherein the second unit is releasable from the first unit.

3. The wind turbine according to claim 1 or 2, comprising a fluid supply assembly facilitating a fluid flow from a water supply to the electrolysis cell stack, the fluid supply assembly being located outside the second unit.

4. The wind turbine according to claim 3, wherein the fluid supply assembly is located in the first unit.

5. The wind turbine according to any of the preceding claims, comprising a fluid delivery assembly facilitating a fluid flow from the electrolysis cell stack to a recipient.

6. The wind turbine according to any of the preceding claims, comprising an air passage, and a filter, the air passage arranged to lead ambient air through the filter, and the filter configured for binding CO₂.

7. The wind turbine according to claim 6, comprising a catalyst to transform carbon dioxide into ethanol.

8. The wind turbine according to any of the preceding claims, wherein the second unit is connected to the wind turbine tower via the first unit.

9. The wind turbine according to any of the preceding claims, comprising a third unit assembled to one or the two separate units and housing a power conversion assembly connected between the generator and a power grid.

10. The wind turbine according to any of the preceding claims, comprising a cooling arrangement (23) connected to the rotor-supporting assembly and to the electrolysis cell stack.

11. The wind turbine according to claim 10, wherein the cooling arrangement (23) is switchable between a configuration where it cools the rotor-supporting assembly and a configuration where it cools the electrolysis cell stack.

12. A method of making a chemical substance by use of an electrolysis cell stack (34) connected to a generator (6) driven by wind energy, the method comprising:
- providing a wind turbine (1) comprising at least two separate units (20,21) assembled to form a nacelle (2) connected to a wind turbine tower, (3) wherein a first unit (20) of said two units (20,21) houses a rotor-supporting assembly and a generator (6), and a second unit (21) of said two units (20,21) houses an electrolysis cell stack (34), and
- powering the electrolysis cell stack (34) by the generator (6).

13. The method according to claim 12, comprising the step of feeding the electrolysis cell stack with water via a supply assembly located outside the second unit.

14. The method according to claim 12 or 13, comprising the step conducting the chemical substance from the electrolysis cell stack via a delivery assembly outside the second unit.

## Patentansprüche

1. Windkraftanlage (1), die mindestens zwei getrennte Einheiten (20, 21) umfasst, die zusammengebaut sind, um eine Gondel (2) zu bilden, die mit einem Windkraftanlagenturm (3) verbunden ist, wobei eine erste Einheit (20) der zwei Einheiten (20,21) eine Rotorträgerbaugruppe und einen Generator (6) beherbergt, und wobei die erste Einheit (20) mit dem Windkraftanlagenturm (3) verbunden ist; **dadurch gekennzeichnet, dass** eine zweite Einheit (21) der zwei Einheiten (20,21) einen Elektrolysezellenstapel (34) beherbergt, der von dem Generator (6) mit Leistung versorgt wird.

2. Windkraftanlage nach Anspruch 1, wobei die zweite Einheit von der ersten Einheit lösbar ist.

3. Windkraftanlage nach Anspruch 1 oder 2, die eine Fluidzufuhrbaugruppe umfasst, die eine Fluidströmung von einer Wasserzufuhr zum Elektrolysezellenstapel begünstigt, wobei sich die Fluidzufuhrbaugruppe außerhalb der zweiten Einheit befindet.

4. Windkraftanlage nach Anspruch 3, wobei sich die Fluidzufuhrbaugruppe in der ersten Einheit befindet.

5. Windkraftanlage nach einem der vorstehenden Ansprüche, die eine Fluidabgabebaugruppe 5 umfasst, die eine Fluidströmung vom Elektrolysezellenstapel zu einem Empfänger begünstigt.

6. Windkraftanlage nach einem der vorstehenden Ansprüche, die einen Luftdurchlass und einen Filter umfasst, wobei der Luftdurchlass angeordnet ist, um Umgebungsluft durch den Filter hindurch zu leiten, und der Filter zum Binden von CO₂ konfiguriert ist.

7. Windkraftanlage nach Anspruch 6, die einen Katalysator umfasst, um Kohlendioxid in Ethanol umzuwandeln.

8. Windkraftanlage nach einem der vorstehenden Ansprüche, wobei die zweite Einheit über die erste Einheit mit dem Windkraftanlagenturm verbunden ist.

9. Windkraftanlage nach einem der vorstehenden Ansprüche, die eine dritte Einheit umfasst, die mit einer oder den zwei getrennten Einheiten zusammengebaut ist und eine Leistungsumwandlungsbaugruppe beherbergt, die zwischen dem Generator und einem Stromnetz verbunden ist.

10. Windkraftanlage nach einem der vorstehenden Ansprüche, die eine Kühlanordnung (23) umfasst, die mit der Rotorträgerbaugruppe und mit dem Elektrolysezellenstapel verbunden ist.

11. Windkraftanlage nach Anspruch 10, wobei die Kühlanordnung (23) zwischen einer Konfiguration, in der sie die Rotorträgerbaugruppe kühlt, und einer Konfiguration, in der sie den Elektrolysezellenstapel kühlt, umschaltbar ist.

12. Verfahren zum Herstellen einer chemischen Substanz durch Verwenden eines Elektrolysezellenstapels (34), der mit einem durch Windenergie angetriebenen Generator (6) verbunden ist, wobei das Verfahren umfasst:
- Bereitstellen einer Windkraftanlage (1), die mindestens zwei getrennte Einheiten (20,21) umfasst, die zusammengebaut sind, um eine Gondel (2) zu bilden, die mit einem Windkraftanlagenturm (3) verbunden ist, wobei eine erste Einheit (20) der zwei Einheiten (20,21) eine Rotorträgerbaugruppe und einen Generator (6) beherbergt, und eine zweite Einheit (21) der zwei Einheiten (20,21) einen Elektrolysezellenstapel (34) beherbergt,
und
- Versorgen des Elektrolysezellenstapels (34) mit Leistung durch den Generator (6).

13. Verfahren nach Anspruch 12, das den Schritt des Speisens des Elektrolysezellenstapels mit Wasser über eine Zufuhrbaugruppe umfasst, die sich außerhalb der zweiten Einheit befindet.

14. Verfahren nach Anspruch 12 oder 13, das den Schritt des Leitens der chemischen Substanz aus dem Elektrolysezellenstapel über eine Abgabebaugruppe außerhalb der zweiten Einheit umfasst.

## Revendications

1. Éolienne (1) comprenant au moins deux unités distinctes (20, 21) assemblées pour former une nacelle (2) reliée à une tour (3) d'éolienne, dans laquelle une première unité (20) desdites deux unités (20, 21) loge un ensemble de support de rotor et un générateur (6), et dans laquelle la première unité (20) est reliée à ladite tour (3) d'éolienne ; **caractérisée en ce qu'**une deuxième unité (21) desdites deux unités (20, 21) loge un empilement de cellules d'électrolyse (34) alimenté par ledit générateur (6).

2. Éolienne selon la revendication 1, dans laquelle la deuxième unité est amovible par rapport à la première unité.

3. Éolienne selon la revendication 1 ou 2, comprenant un ensemble d'alimentation en fluide facilitant un écoulement de fluide d'une alimentation en eau à l'empilement de cellules d'électrolyse, l'ensemble d'alimentation en fluide étant situé à l'extérieur de la deuxième unité.

4. Éolienne selon la revendication 3, dans laquelle l'ensemble d'alimentation en fluide est situé dans la première unité.

5. Éolienne selon l'une quelconque des revendications précédentes, comprenant un ensemble de distribution de fluide facilitant un écoulement de fluide de l'empilement de cellules d'électrolyse à un récepteur.

6. Éolienne selon l'une quelconque des revendications précédentes, comprenant un passage d'air et un filtre, le passage d'air étant agencé pour conduire l'air ambiant à travers le filtre, et le filtre étant configuré pour capter le CO₂.

7. Éolienne selon la revendication 6, comprenant un catalyseur pour transformer le dioxyde de carbone en éthanol.

8. Éolienne selon l'une quelconque des revendications précédentes, dans laquelle la deuxième unité est reliée à la tour d'éolienne par le biais de la première unité.

9. Éolienne selon l'une quelconque des revendications précédentes, comprenant une troisième unité assemblée à l'une ou aux deux unités distinctes et logeant un ensemble de conversion de puissance monté entre le générateur et un réseau électrique.

10. Éolienne selon l'une quelconque des revendications précédentes, comprenant un système de refroidissement (23) relié à l'ensemble de support de rotor et à l'empilement de cellules d'électrolyse.

11. Éolienne selon la revendication 10, dans laquelle le système de refroidissement (23) est commutable entre une configuration dans laquelle il refroidit l'ensemble de support de rotor, et une configuration dans laquelle il refroidit l'empilement de cellules d'électrolyse.

12. Procédé de fabrication d'une substance chimique au moyen d'un empilement de cellules d'électrolyse (34) relié à un générateur (6) alimenté par l'énergie éolienne, le procédé comprenant :
- la fourniture d'une éolienne (1) comprenant au moins deux unités distinctes (20, 21) assemblées pour former une nacelle (2) reliée à une tour (3) d'éolienne, dans lequel une première unité (20) desdites deux unités (20, 21) loge un ensemble de support de rotor et un générateur (6), et une deuxième unité (21) desdites deux unités (20, 21) loge un empilement de cellules d'électrolyse (34),
et
- l'alimentation de l'empilement de cellules d'électrolyse (34) par le générateur (6).

13. Procédé selon la revendication 12, comprenant l'étape d'alimentation de l'empilement de cellules d'électrolyse en eau par le biais d'un ensemble d'alimentation situé à l'extérieur de la deuxième unité.

14. Procédé selon la revendication 12 ou 13, comprenant l'étape de guidage de la substance chimique depuis l'empilement de cellules d'électrolyse, par le biais d'un ensemble de distribution, à l'extérieur de la deuxième unité.
